# EUROPÄISCHE PATENTSCHRIFT

(11) **EP 1 647 354 B1**
(45) Veröffentlichungstag und Bekanntmachung des Hinweises auf die Patenterteilung: **07.02.2007**
(21) Anmeldenummer: 05022204.1
(22) Anmeldetag: 12.10.2005
(51) Int. Cl.: B23Q 1/01

(54) **Miniatur-Bearbeitungszentrum mit vielachsigem Bohr-oder Fräswerkzeug**
Miniature machining center with multiaxis drilling tool or milling cutter
Centre d'usinage miniature avec outil de perçage ou fraise avec axes multiples

(30) Priorität: 16.10.2004 DE 202004016057 U
(43) Veröffentlichungstag der Anmeldung: 19.04.2006
(73) Patentinhaber: Kämmerer, Sigrid, 47574 Goch-Pfalzdorf (DE)
(72) Erfinder: Kämmerer, Günther, 45468 Mülheim/Ruhr (DE); Kämmerer, Michael, 47574 Goch-Pfalzdorf (DE)
(74) Vertreter: Schumacher, Horst

(56) Entgegenhaltungen:
- EP-A- 1 316 388
- EP-A- 1 402 991
- US-A- 5 415 610
- US-A- 5 678 291
- US-A1- 2003 049 087

## Beschreibung

Die Erfindung betrifft ein Miniatur-Bearbeitungszentrum mit vielachsigem Bohr- oder Fräswerkzeug mit einem Werkstück-Spanntisch, einem Bohr- oder Fräskopf, Verstelleinrichtungen für die verschiedenen Bearbeitungsachsen sowie einem den Werkstück-Spanntisch und den Bohr- oder Fräskopf gemeinsam tragenden Maschinen-Gestell.

Fünfachsige Bearbeitungszentren werden für komplexe Bohr- und Fräsarbeiten an komplexen Werkstücken angeboten, bei denen, den sehr vielfältigen Anforderungen und hohen Arbeitslasten entsprechend, aufwendige Konstruktionen und starke Antriebe verwendet werden. Selbst auf dem Markt erhältliche sogenannte Mini-Fräsmaschinen benötigen Antriebsleistungen von mehreren kW. Sie weisen äußere Abmessungen in der Größenordnung von einem Meter oder mehr als Breite, Höhe oder Länge auf und besitzen ein erhebliches Gewicht. Eine etwaige Einhausung des Arbeitsraumes führt zu weiterer Gewichtserhöhung und Vergrößerung der Abmessungen. Auch solche Mini-Fräsmaschinen sind außerordentlich kostspielig.

Die EP 1 402 991 A2 zeigt eine Werkzeugmaschine mit einem auf zwei Führungen verfahrbaren Fahrständer der die horizontale Arbeitsspindel trägt und an Führungen deren Vertikalverlagerung gestattet. Ein Spanntisch 70 ist mittels Führungen 55/56 entlang eines kastenartig ausgeführten Bettes 2 horizontal verfahrbar. Der den Fahrständer tragende ortsfeste Ständer ist mit dem Bett als einteilige Kastenkonstruktion ausgebildet.

Davon ausgehend liegt der Erfindung die Aufgabe zugrunde, ein Miniatur-Bearbeitungszentrum zu schaffen, welches hinsichtlich der Gesamtabmessungen, des Gewichtes und/oder des Herstellungsaufwandes spürbar günstiger ist und sich für wirtschaftliche Klein- und Kleinst-, Serien- sowie Einzelbearbeitung eignet.

Diese Aufgabe wird durch ein Miniatur-Bearbeitungszentrum mit dem Merkmal des Anspruchs 1 gelöst. Eine im wesentlichen horizontale Grundplatte trägt den Werkstück-Spanntisch und eine im wesentlichen vertikale Seitenwand trägt den Bohr- oder Fräskopf, wobei ein Versteifungselement zwischen der Seitenwand und der Grundplatte wirksam ist. Ein bevorzugter Lösungsweg besteht darin, den Werkstück-Spanntisch und den Bohr- oder Fräskopf mittels modulartiger Wände einander zuzuordnen.

Durch die Erfindung wird unter anderem erreicht, dass für eine vielachsige WerkstückBearbeitung die Antriebs- und Verstell-Aggregate aus leicht verfügbaren Standardbauteilen bestehen können, gleichwohl aber eine außerordentlich hohe Bearbeitungspräzision und Reproduzierbarkeit von Bearbeitungsergebnissen erzielt wird, eine Arbeitsraumeinhausung mit besonders geringem Aufwand möglich ist und durch einen modulartigen Aufbau des Maschinengestells und/oder der übrigen Antriebsteile eine hohe Variantenvielfalt nach Maßgabe der Kundenanforderungen zu vergleichsweise erschwinglichen Kosten möglich ist. Femer können sehr energieschonende Antriebe verwendet werden, so dass ein geringes Maschinengewicht, leiser Betrieb und geringe Energiekosten erreicht werden. Ein derartiges Miniatur-Bearbeitungszentrum eignet sich zum Beispiel auch für CNC gesteuerte Bearbeitung im Dentalbereich sowie in vielen anderen Anwendungsfeldern, bei denen es auf hohe Maßpräzision komplexer Oberflächenstrukturen ankommt. Insbesondere sind erfindungsgemäße Miniatur-Bearbeitungszentren zur Fein- oder Endbearbeitung von Präzisionsteilen geeignet, bei denen es nicht auf großen Materialabhub sondern große Abmessungs-Präzision und Reproduzierbarkeit ankommt.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - Ausführungsbeispiele eines Miniatur-Bearbeitungszentrums mit vielachsigem Bohr- und Fräswerkzeug dargestellt ist.

In der Zeichnung zeigen:
- Fig. 1: ein Miniatur-Bearbeitungszentrum perspektivisch;
- Fig. 2: das Miniatur-Bearbeitungszentrum nach Fig. 1 in einer zweiten perspektivischen Ansicht aber ohne Gehäuse;
- Fig. 3: dasselbe Miniatur-Bearbeitungszentrum in Ansicht von vorne (Ansicht A-A gemäß Fig. 1 A) ohne Gehäuse;
- Fig. 4: dasselbe Miniatur-Bearbeitungszentrum in linker Seitenansicht (Ansicht B-B gemäß Fig. 1A) ohne Gehäuse, wobei das Maschinengestell durchsichtig (wie aus gläsernen Wänden) dargestellt ist;;

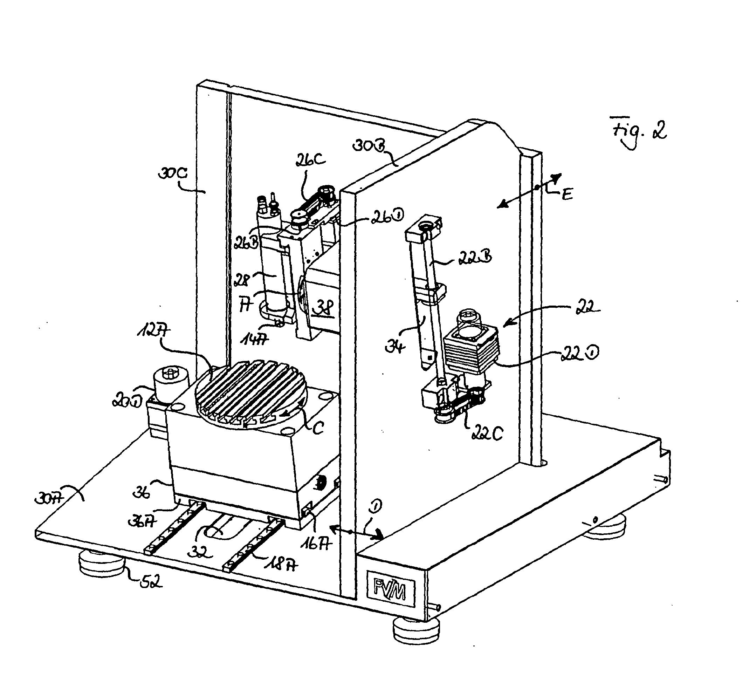

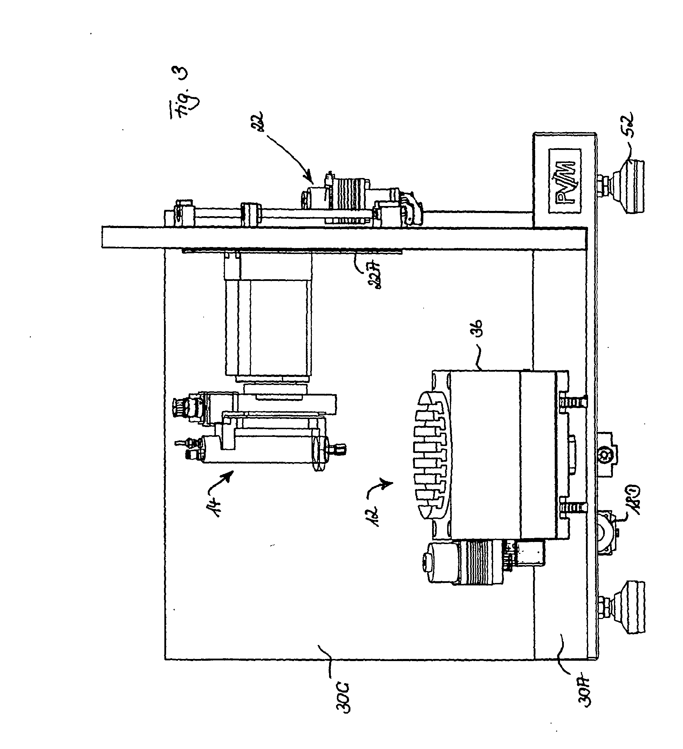

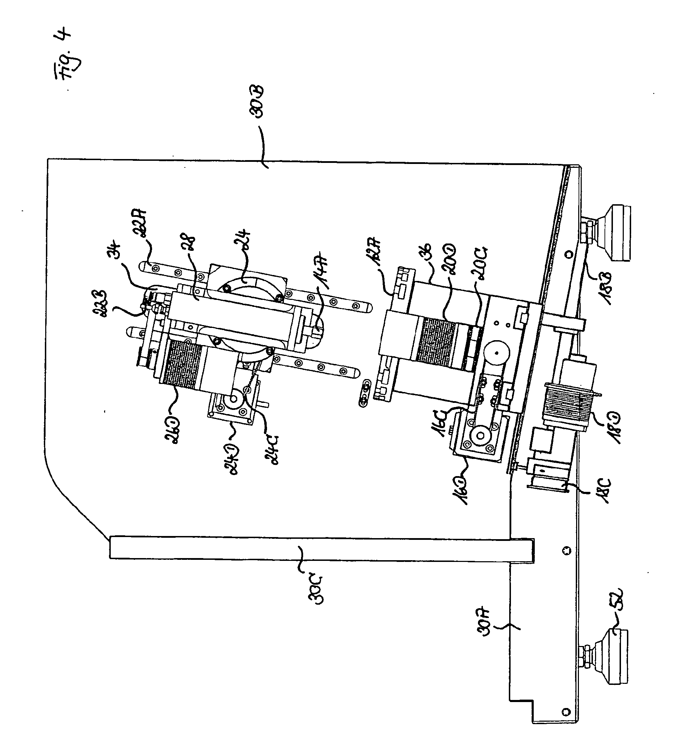

- Fig. 5: dasselbe Miniatur-Bearbeitungszentrum in Ansicht von oben (Ansicht C-C gemäß Fig. 1 A) ohne Gehäuse;
- Fig. 6A: von demselben Miniatur-Bearbeitungszentrum den Arbeitstisch in perspektivischer Darstellung ohne Gehäuseteile;
- Fig. 6B: denselben Arbeitstisch samt Gehäuse im Vertikalschnitt;
- Fig. 7A: von demselben Miniatur-Bearbeitungszentrum die Grundplatte mit 2 Arbeitstischverstelleinrichtungen als perspektivische Explosionsdarstellung sowie
- Fig.7B: von demselben Miniatur-Bearbeitungszentrumdie Seitenwände mit 2 Bohr/Fräskopf-Verstelleinrichtungen als perspektivische Explosionsdarstellung.

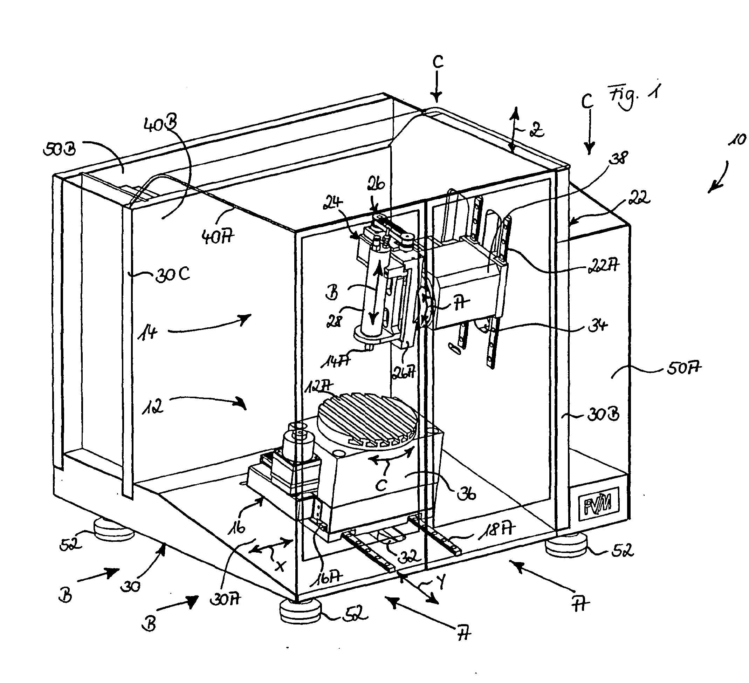

Wie aus Figur 1 ersichtlich, besteht ein insgesamt mit 10 bezeichnetes Miniatur-Bearbeitungszentrum aus folgenden Kernbestandteilen: Einem als Arbeitstisch 12 dienenden Werkstück-Spanntisch, einem Bohr- oder Fräskopf 14, Verstelleinrichtungen 16 bis 26 für die verschiedenen Bearbeitungsachsen sowie einem Maschinengestell 30 bestehend aus einer Grundplatte 30A, einer plattenförmigen Seitenwand 30B und einem zwischen der Seitenwand und der Grundplatte wirksamen Versteifungselement 30C. In den dargestellten und insoweit bevorzugten Ausführungsformen definiert das Maschinengestell 30 einen Arbeitsraum, der durch ein Gehäuseteil 40 zu einem geschlossenen Arbeitsraum schließbar ist, wobei das, vorzugsweise durchsichtige, Gehäuseteil 40 aus einer Seitenwand 40B, einer Deckenwand 40A und einer öffen- und schließbaren Frontwand 40C besteht. An den Bearbeitungsraum schließen sich jeweils an den Rückseiten der Seitenwand 30B und des Versteifungselementes 30C Nebenräume 50A und 50B an, die durch weitere, zum Teil durchsichtige Wände geschlossen sind und die Versorgung mit elektrischer Energie, Arbeitsfluiden und Schnittstelle für eine Steuerung beherbergen können.

Es ist möglich, dass bei identischen Außenabmessungen des Miniatur-Bearbeitungszentrums der Bearbeitungsraum zugunsten bzw. zu Lasten der Nebenräume in seinen Abmessungen verändert werden kann, indem eine in der Zeichnung nicht detailliert dargestellte Möglichkeit zum Verbreitern und/oder Verlängern bzw. zum schmaler Machen und/oder Verkürzen vorgesehen wird (siehe Doppelpfeile D und E in Fig.2), insbesondere durch modulartige Zusammenstellung des Maschinengestells 30. Diese Anpassung an den Bedarfsfall des Kunden kann u.a. durch modulare Adapterstücke im Bereich der Grundplatte erzielt werden.

Die vielachsige Verstellbarkeit des Bohr- oder Fräswerkzeuges 14A des Bohr- oder Fräskopfes 14, die nachfolgend im Einzelnen noch beschrieben werden wird, umfasst bei den dargestellten und insoweit bevorzugten Ausführungsbeispielen eine sechsachsige Verstellmöglichkeit des Bohr- oder Fräswerkzeuges in Bezug auf das am Arbeitstisch festzuspannende zu bearbeitende Werkstück:
Eine Verstelleinrichtung 16 gestattet ein Verfahren des Spanntisches 12A in Richtung der X-Koordinate mit einem Verfahrweg von z. B. 120 mm;
Eine Verstelleinrichtung 18, deren Antrieb in einem Hohlraum auf der Unterseite der Grundplatte 30A angeordnet ist, gestattet das Verfahren des Spanntisches 12A in der Y-Achse mit einem Verfahrweg von z. B. 280 mm;
Fig. 1 zeigt den Spanntisch 12A in einer Null-Stellung, von der er (in der Zeichnung nach rechts und links) in Extrempositionen der X-Achse verfahrbar ist.

Eine Verstelleinrichtung 20 gestattet das Verschwenken des Spanntisches 12A um eine flächennormale Achse mit einem insbesondere unbegrenzten Drehwinkel C;

Eine Verstelleinrichtung 22, deren Antrieb auf der Rückseite der Seitenwand 30B innerhalb des Nebenraumes 50A angeordnet ist, gestattet ein Verstellen des Bohr- oder Fräskopfes in Richtung der Z-Achse bei einem Verfahrweg von z. B. 125 mm;

Eine Verstelleinrichtung 24 gestattet das Verschwenken des Bohr- oder Fräskopfes 14 um eine im wesentlichen horizontale Achse, z. B. um jeweils 90° zu beiden Seiten der Z-Achse. Größere Verschwenkwinkel A sind aber nicht grundsätzlich ausgeschlossen;

Eine Verstelleinrichtung 26 gestattet das Verfahren des Bohr- oder Fräswerkzeuges 14A in einer Richtung, die etwa parallel zur Werkzeugachse ist, und gestattet z. B. einen Verfahrweg B von 40 mm;

Ferner ist ein Bohr- oder Fräsantrieb 28 vorgesehen, der das Bohr- oder Fräswerkzeug 14A, vorzugsweise hochtourig, antreibt. Hohe Drehzahlen von z. B. 10.000 bis 80.000 Umdrehungen pro Minute gestatten es nicht nur, die Antriebskraft gering zu halten, sondern auch die sich entwickelnde Wärme vornehmlich über die abgearbeiteten Werkstückspähne abzuführen. Die völlige Einhausung des Arbeitsraumes ist daher auch aus Gründen der Eindämmung der Staubverbreitung von Vorteil.

Wie aus Fig. 1 ersichtlich, sind die zueinander rechtwinkligen Koordinaten der X-, Y- und Z-Achsen gegenüber den Aufstandsfüßen 52 des Miniatur-Bearbeitungszentrums um einen gewissen Winkel (in der Zeichnung z. B. um etwa 10°-15° nach vorne) d. h. zur Frontwand 40C hin geneigt. Diese Neigung wird durch eine Schrägstellung der Oberseite der Grundplatte 30A sowie eine dementsprechende Schrägstellung der Führungen des Bohr- oder Fräskopfes 14 in Richtung der Z-Achse an der Seitenwand 30B erreicht. Durch diese Schrägstellung werden Werkstückspähne in einer Vorzugsrichtung zum Wandern und sich Sammeln veranlasst, so dass der Arbeitstisch 12 in gewissem Umfang von solchen Spähnen selbsttätig befreit wird. Außerdem führt die Schrägstellung zu einer Verbesserung der Aufspannbarkeit der Werkstücke. Schließlich wird durch die Schrägstellung der Grundplatte 30A auf deren Unterseite der bereits erwähnte Platz zur Unterbringung des Antriebs der Verstelleinrichtung 18 für die Bewegung des Arbeitstisches in der Y-Achse erreicht. Einige der Verstellantriebe sind also beidseitig des Maschinengestells 30 angeordnet.

Der plattenförmige Aufbau der Grundplatte 30 A und der Seitenwand 30B erlaubt eine einfache Herstellung und einen einfachen Zusammenbau des Maschinengestells - dies auch in Verbindung mit maßlichen Veränderung nach Kundenwünschen, wie weiter oben dargelegt.

Die dreidimensionale Aufspannung eines Arbeitsraumes durch die Grundplatte 30A und die Seitenwand 30B und das vorzugsweise als Rückwand ausgebildete Versteifungselement 30C ermöglicht trotz der einfachen Herstellbarkeit des Maschinengestells eine außerordentlich hohe Steifigkeit desselben mit der Folge einer außerordentlich hohen Bearbeitungspräzision. Die hierfür verwendeten Führungsschienen 16A, 18A,... können in Form von Serienbauteilen mit entsprechenden Präzisionsmerkmalen, z. B. durch einfache Schraubverbindungen befestigt werden. Präzisionsspindeln in Verbindung mit Zahnriemen und vergleichsweise leistungsschwachen Schrittmotoren können für jeden der sechs Verstellantriebe Verwendung finden. Sie sind auf dem Markt in guter Auswahl erhältlich und leicht montierbar.

Auf diese Weise wird bei minimalen Maschinenabmessungen, bei vergleichsweise geringem Gewicht und geringen Antriebskräften ein vielachsiges höchst präzises Miniatur-Bearbeitungszentrum bereitgestellt, dass z. B. über ein Notebook auf einfache Weise gesteuert werden kann.

Aus Fig. 2 ist anhand von Doppelpfeilen D und E im Prinzip ersichtlich, wie durch Versetzen der Seitenwand 30B und/oder des Versteifungselementes 30C bei vorgegebener Grundgröße des Miniatur-Bearbeitungszentrums die Größe des Bearbeitungsraumes veränderbar ist.

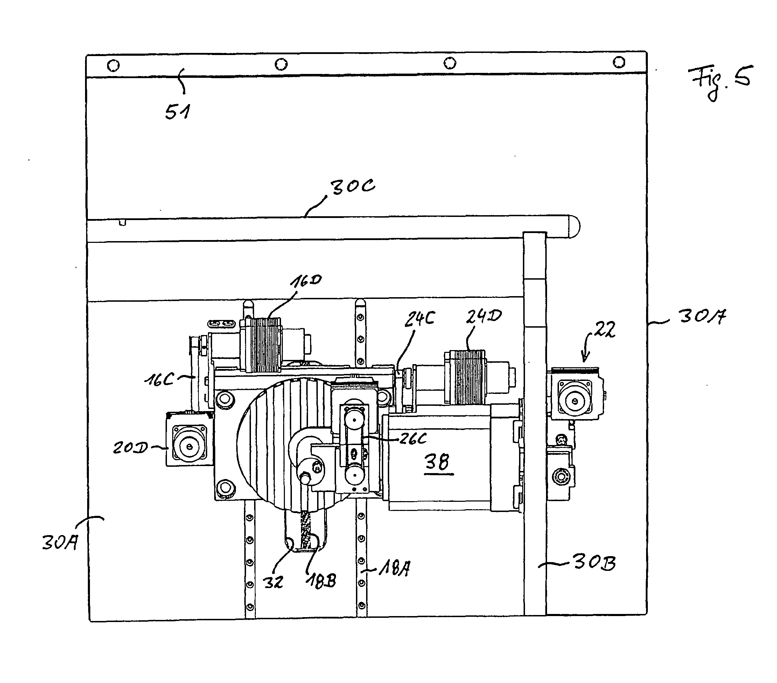

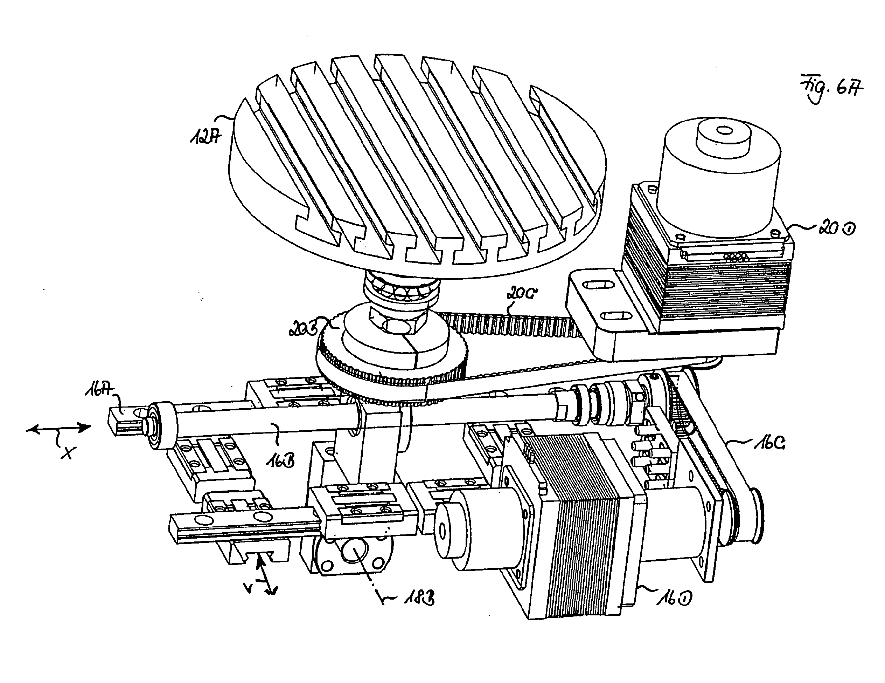

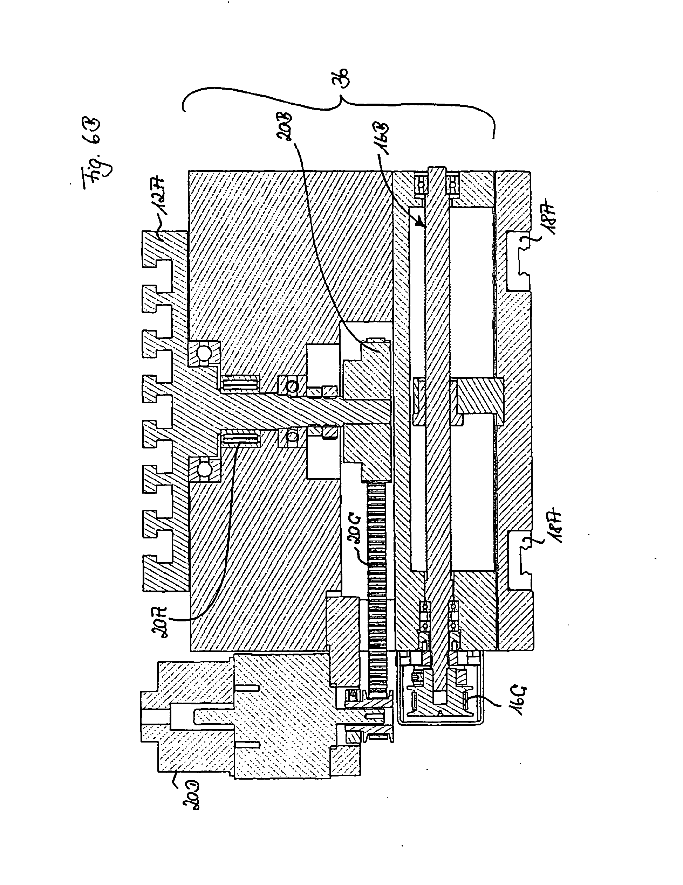

Aus Fig. 6A ist die Anordnung des Schrittmotors 20D für die Drehung C des Spanntisches 12A und der Schrittmotor 16D für die Verstellung des Spanntisches 12A in X-Richtung ersichtlich. Über Zahnriemen 20C bzw. 16C sowie eine Riemenscheibe 20B bzw. einem Spindeltrieb 16B (Fig. 6B) erfolgt die Antriebsverbindung zum Spanntisch 12A bzw. zum Spanntischgehäuse 36.

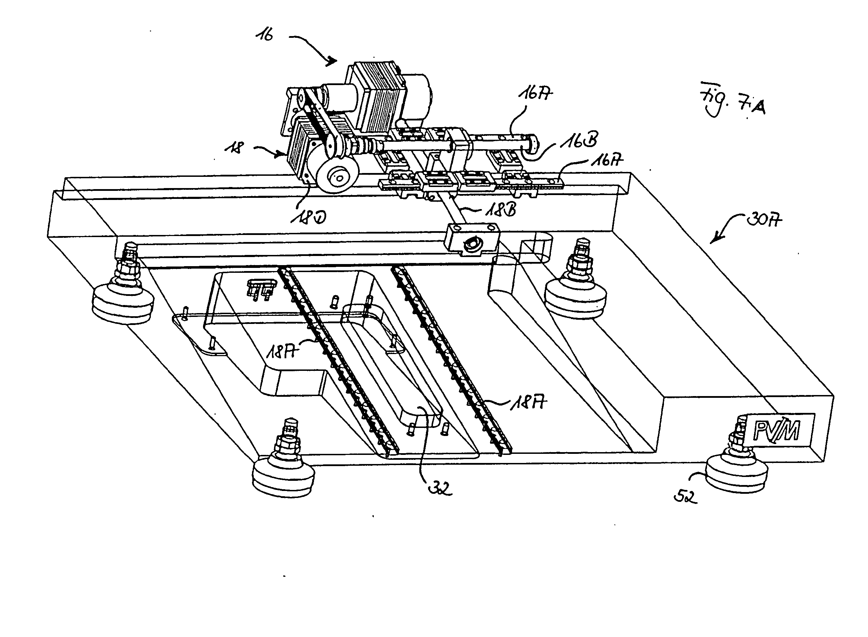

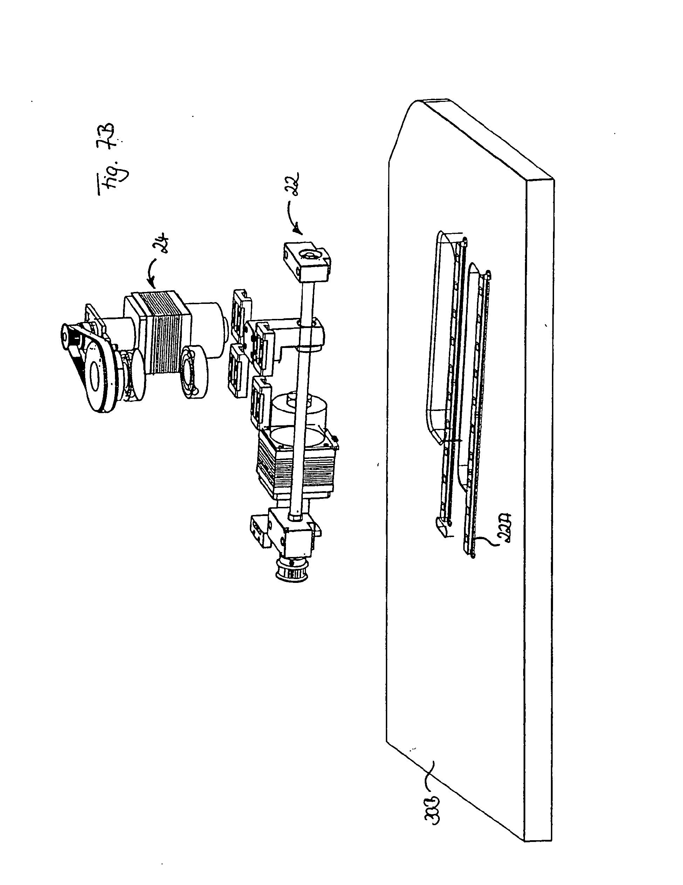

Aus Fig. 7A ist Lage des Schrittmotores 18D der Verstelleinrichtung 18 sowie der zugehörige Spindeltrieb18B für seine Anordnung auf der Unterseite der Grundplatte 30A ersichtlich. In Fig. 7B erkennt man den entsprechenden Aufbau der Seitenwand. Um einen Teil der Antriebe nach außerhalb des Arbeitsraumes zu verlagern, ist in die Grundplatte 30A eine längliche Durchbrechung 32 zum Durchführen eines Antriebszapfens und in der Seitenwand 30B eine längliche Durchbrechung 34 (beide jeweils parallel zu den Führungsschienen 18A, 22A) für einen entsprechenden Antriebszapfen zu erkennen. Dadurch wird das Spanntischgehäuse 36 bzw. das Bohr- Fräspindelgehäuse 38 insgesamt entlang der X- bzw. Z-Achse verlagerbar.

### Bezugszeichenliste

- 10: Miniatur-Bearbeitungszentrum
- 12: Arbeitstisch
- 12A: Spanntisch
- 14: Bohr- oder Fräskopf
- 14A: Bohr- und Fräswerkzeug
- 16: Verstelleinrichtung
- 16A: Führungsschiene
- 16B: Spindeltrieb
- 16C: Zahnriemen
- 16D: Schrittmotor
- 18: Verstelleinrichtung
- 18A: Führungsschiene
- 18B: Spindeltrieb
- 18C: Zahnriemen
- 18D: Schrittmotor
- 20: Verstelleinrichtung
- 20A: Führung
- 20B: Riemenscheibe
- 20C: Zahnriemen
- 20D: Schrittmotor
- 22: Verstelleinrichtung
- 22A: Führungsschiene
- 22B: Spindeltrieb
- 22C: Zahnriemen
- 22D: Schrittmotor
- 24: Verstelleinrichtung
- 24A: Führungsschiene
- 24B: Spindeltrieb
- 24C: Zahnriemen
- 24D: Schrittmotor
- 25: Verstelleinrichtung
- 26A: Führungsschiene

- 26B: Spindeltrieb
- 26C: Zahnriemen
- 26D: Schrittmotor
- 28: Bohr- / Fräsantrieb
- 30: Maschinengestell
- 30A: Grundplatte
- 30B: Seitenwand
- 30C: Versteifungselement
- 32: Durchbrechung
- 34: Durchbrechung
- 36: Spanntischgehäuse
- 36A: Basisplatte
- 38: Bohr- /Frässpindelgehäuse
- 40: Gehäuseteil
- 40A: Deckenwand
- 40B: Seitenwand
- 40C: Frontwand
- 50A: Nebenraum
- 50B: Nebenraum
- 51: Nebenraum - Außenwand
- 52: Aufstandsfüße

- AA: Ansicht von vorne
- BB: Seitenansicht
- CC: Ansicht von oben

- A: Schwenkrichtungsdoppelpfeil
- B: Verfahrrichtungsdoppefpfeil
- C: Verschwenkrichtungsdoppelpfeil
- D: Seitenwandverstellung
- E: Versteifungselementverstellung

## Patentansprüche

1. Miniatur-Bearbeitungszentrum (10) mit vielachsigem Bohr- oder Fräswerkzeug (14A) mit einem als Arbeitstisch (12) dienenden Werkstück-Spanntisch (12A), einem Bohr- oder Fräskopf (14), Verstelleinrichtungen (16, ....., 26) für die verschiedenen Bearbeitungsachsen (X, Y, Z, A, B, C) sowie einem den Werstück-Spanntisch und den Bohr- oder Fräskopf gemeinsam tragenden Maschinengestell (30), bei dem das Maschinengestell (30) ausschließlich aus einer im wesentlichen horizontalen, den Werkstück-Spanntisch tragenden, im wesentlichen plattenförmig gestalteten, Grundplatte (30A), einer im wesentlichen vertikalen, den Bohr- oder Fräskopf tragenden, im wesentlichen plattenförmig gestalteten, Seitenwand (30B) sowie einem zwischen der Seitenwand und der Grundplatte wirksamen Versteifungselement (30C) besteht.

2. Miniatur-Bearbeitungsszentrum nach Anspruch 1, **gekennzeichnet durch** einen modulartigen Aufbau des Maschinengestells (30).

3. Miniatur-Bearbeitungsszentrum nach Anspruch 1 oder 2, **dadurch gekennzeichnet, dass** zumindest ein Antrieb oder ein Teil des Antriebes für das Verfahren des Bohr- oder Fräskopfes auf der Rückseite der Seitenwand (30B) angeordnet ist.

4. Miniatur-Bearbeitungsszentrum nach einem der Ansprüche 1 bis 3, **dadurch gekennzeichnet, dass** zumindest ein Antrieb oder der Teil eines Antriebes für das Verfahren des Spanntisches (12A) auf der Unterseite der Grundplatte (30A) angeordnet ist.

5. Miniatur-Bearbeitungsszentrum nach Anspruch 3 oder 4, **gekennzeichnet durch** eine Durchbrechung (32) in der Grundplatte (30A) und/oder eine Durchbrechung (34) in der Seitenwand (30B).

6. Miniatur-Bearbeitungsszentrum nach einem der Ansprüche 1 bis 5, **dadurch gekennzeichnet, dass** Verstellantriebe für den Spanntisch (12A) und/oder den Bohr- oder Fräskopf (14) beidseitig der Grundplatte (30A) bzw. der Seitenwand (30B) angeordnet sind.

7. Miniatur-Bearbeitungsszentrum nach einem der Ansprüche 1 bis 6, **dadurch gekennzeichnet, dass** das Versteifungselement (30C) als Rückwand ausgebildet ist.

8. Miniatur-Bearbeitungsszentrum nach einem der Ansprüche 1 bis 7, **dadurch gekennzeichnet, dass** die Verstelleinrichtungen (16, ...., 26) zumindest teilweise über Zahnriemen angetriebene Spindeltriebe aufweisen.

9. Miniatur-Bearbeitungsszentrum nach einem der Ansprüche 1 bis 8, **dadurch gekennzeichnet, dass** zumindest ein für eine Verstelleinrichtung (16, ...., 26) vorgesehener Spindeltrieb beidseitig über Zahnriemen antreibbar sind.

10. Miniatur-Bearbeitungsszentrum nach einem der Ansprüche 1 bis 3, **dadurch gekennzeichnet, dass** das Maschinengestell (30) einen Arbeitsraum definiert.

11. Miniatur-Bearbeitungsszentrum nach einem der Ansprüche 1 bis 10, **gekennzeichnet durch** ein Gehäuseteil (40) zum Schließen eines Arbeitsraumes.

12. Miniatur-Bearbeitungsszentrum nach Anspruch 11, **dadurch gekennzeichnet, dass** die Wände des Gehäuseteils (40) zumindest teilweise durchsichtig sind.

13. Miniatur-Bearbeitungsszentrum nach einem der Ansprüche 1 bis 12, **gekennzeichnet durch** mindestens einen seitlich des Arbeitsraumes angeordneten Nebenraum (50A; 50B).

14. Miniatur-Bearbeitungsszentrum nach einem der Ansprüche 1 bis 13, **dadurch gekennzeichnet, dass** die Seitenwand (30B) und /oder das Versteifungselement (30C) unter Vergrößern oder Verkleinern des Arbeitsraumes versetzbar ist.

15. Miniatur-Bearbeitungsszentrum nach Anspruch 14, **gekennzeichnet durch** mindestens ein modulares Adapterstück im Bereich der Grundplatte.

16. Miniatur-Bearbeitungsszentrum nach einem der Ansprüche 1 bis 15, **dadurch gekennzeichnet, dass** die Grundplatte (30A) gegenüber der Horizontalen schräg gestellt ist.

17. Miniatur-Bearbeitungsszentrum nach einem der Ansprüche 1 bis 16, **dadurch gekennzeichnet, dass** die Führungen des Bohr-/ Fräskopfes (14) zum Verfahren desselben in Z-Richtung gegenüber der Vertikalen schräg gestellt sind.

## Claims

1. A miniature machining centre (10) with a multi-axis drilling or milling machine (14A) with a workpiece holding table (12A) serving as a worktable (12), with a drilling or milling head (14), adjusting means (16,..., 26) for the different machining axes (X,Y,Z,A,B,C), and also a machine frame (30) jointly supporting the workpiece holding table and the drilling or milling head, in which the machine frame (30) exclusively comprises a substantially horizontal base plate (30A), which supports the workpiece holding table and is of substantially plate-like configuration, a substantially vertical side wall (30B), which supports the drilling or milling head and is of substantially plate-like configuration, and also a reinforcing element (30C) acting between the side wall and the base plate.

2. A miniature machining centre according to Claim 1, **characterised by** a modular-type construction of the machine frame (30).

3. A miniature machining centre according to Claim 1 or 2, **characterised in that** at least one drive unit or part of the drive unit is provided for traversing the drilling or milling head on the rear side of the side wall (30B).

4. A miniature machining centre according to any one of Claims 1 to 3, **characterised in that** at least one drive unit or part of the drive unit is provided for traversing the holding table (12A) on the underside of the base plate (30A).

5. A miniature machining centre according to Claim 3 or 4, **characterised by** an opening (32) in the base plate (30A) and/or an opening (34) in the side wall (30B).

6. A miniature machining centre according to any one of Claims 1 to 5, **characterised in that** adjusting drive means for the holding table (12A) and/or the drilling or milling head (14) are disposed on either side of the base plate (30A) and the side wall (30B).

7. A miniature machining centre according to any one of Claims 1 to 6, **characterised in that** the reinforcing element (30C) is in the form of a rear wall.

8. A miniature machining centre according to any one of Claims 1 to 7, **characterised in that** the adjusting means (16,..., 26) have spindle drives driven at least partly via toothed belts.

9. A miniature machining centre according to any one of Claims 1 to 8, **characterised in that** at least one spindle drive provided for an adjusting means (16,..., 26) can be driven on either side via toothed belts.

10. A miniature machining centre according to any one of Claims 1 to 3, **characterised in that** the machine frame (30) defines a working space.

11. A miniature machining centre according to any one of Claims 1 to 10, **characterised by** a housing part (40) for closing a working space.

12. A miniature machining centre according to Claim 11, **characterised in that** the walls of the housing part (40) are at least partly transparent.

13. A miniature machining centre according to any one of Claims 1 to 12, **characterised by** at least one adjoining space (50A;50B) arranged laterally of the working space.

14. A miniature machining centre according to any one of Claims 1 to 13, **characterised in that** the side wall (30B) and/or the reinforcing element (30C) can be shifted, thus increasing or decreasing the working space.

15. A miniature machining centre according to Claim 14, **characterised by** at least one modular adapter piece in the vicinity of the base plate.

16. A miniature machining centre according to any one of Claims 1 to 15, **characterised in that** the base plate (30A) is arranged inclined relative to the horizontal.

17. A miniature machining centre according to any one of Claims 1 to 16, **characterised in that** the guides of the drilling/milling head (14) are arranged inclined for traversing the latter in direction Z relative to the vertical.

## Revendications

1. Centre d'usinage miniature (10) comprenant un outil de perçage ou de fraisage (14A) à axes multiples avec une table de serrage de pièce (12A) servant de table de travail (12), une tête de perçage ou de fraisage (14), des dispositifs de déplacement (16, ..., 26) pour les différents axes d'usinage (X, Y, Z, A, B, C) et un bâti de machine (30) portant ensemble la table de serrage de pièce et la tête de perçage ou de fraisage, sur lequel le bâti de machine (30) est composé exclusivement d'une plaque de base (30A) sensiblement horizontale, portant la table de serrage de pièce, conçue sensiblement en forme de plaque, une paroi latérale (30B) sensiblement verticale, portant la tête de perçage ou de fraisage, conçue sensiblement en forme de plaque et d'un élément de renfort (30C) efficace entre la paroi latérale et la plaque de base.

2. Centre d'usinage miniature selon la revendication 1, **caractérisé par** une structure modulaire du bâti de machine (30).

3. Centre d'usinage miniature selon la revendication 1 ou 2, **caractérisé en ce qu'**au moins un entraînement ou une partie de l'entraînement pour le déplacement de la tête de perçage ou de fraisage est disposé sur l'arrière de la paroi latérale (30B).

4. Centre d'usinage miniature selon l'une quelconque des revendications 1 à 3, **caractérisé en ce qu'**au moins l'entraînement ou la partie d'un entraînement pour le déplacement de la table de serrage (12A) est disposé sur le côté inférieur de la plaque de base (30A).

5. Centre d'usinage miniature selon la revendication 3 ou 4, **caractérisé par** un percement (32) dans la plaque de base (30A) et/ou un percement (34) dans la paroi latérale (30B).

6. Centre d'usinage miniature selon l'une quelconque des revendications 1 à 5, **caractérisé en ce que** des déplacements pour la table de serrage (12A) et/ou pour la tête de perçage ou de fraisage (14) sont disposés des deux côtés de la plaque de base (30A) ou de la paroi latérale (30B).

7. Centre d'usinage miniature selon l'une quelconque des revendications 1 à 6, **caractérisé en ce que** l'élément de renfort (30C) est conçu comme une paroi arrière.

8. Centre d'usinage miniature selon l'une quelconque des revendications 1 à 7, **caractérisé en ce que** les dispositifs de déplacement (16,..., 26) présentent des transmissions de broche entraînées au moins partiellement par des courroies crantées.

9. Centre d'usinage miniature selon l'une quelconque des revendications 1 à 8, **caractérisé en ce qu'**au moins une transmission de broche prévue pour un dispositif de déplacement (16, ..., 26) peut être entraînée des deux côtés au moyen de courroies crantées.

10. Centre d'usinage miniature selon l'une quelconque des revendications 1 à 3, **caractérisé en ce que** le bâti de machine (30) définit un espace de travail.

11. Centre d'usinage miniature selon l'une quelconque des revendications 1 à 10, **caractérisé par** une partie de boîtier (40) pour la fermeture d'un espace de travail.

12. Centre d'usinage miniature selon la revendication 11, **caractérisé en ce que** les parois de la partie de boîtier (40) sont au moins en partie transparentes.

13. Centre d'usinage miniature selon l'une quelconque des revendications 1 à 12, **caractérisé par** au moins un espace secondaire (50A ; 50B) disposé à côté de l'espace de travail.

14. Centre d'usinage miniature selon l'une quelconque des revendications 1 à 13, **caractérisé en ce que** la paroi latérale (30B) et/ou l'élément de renfort (30C) peut être déplacé en agrandissant ou en réduisant l'espace de travail.

15. Centre d'usinage miniature selon la revendication 14, **caractérisé par** au moins un adaptateur modulaire dans la zone de la plaque de base.

16. Centre d'usinage miniature selon l'une quelconque des revendications 1 à 15, **caractérisé en ce que** la plaque de base (30A) est placée en biais par rapport à l'horizontale.

17. Centre d'usinage miniature selon l'une quelconque des revendications 1 à 16, **caractérisé en ce que** les guides de la tête de perçage/fraisage (14) pour le déplacement de la tête dans la direction Z sont inclinés en biais par rapport à la verticale.
